# EUROPÄISCHE PATENTSCHRIFT

(11) **EP 2 003 482 B1**
(45) Veröffentlichungstag und Bekanntmachung des Hinweises auf die Patenterteilung: **12.10.2011**
(21) Anmeldenummer: 08005563.5
(22) Anmeldetag: 26.03.2008
(51) Int. Cl.: G02B 23/16, G03B 17/48, G02B 7/00, G02B 21/36

(54) **Adapter zur Verbindung eines optischen Aufzeichnungsgeräts mit einem Beobachtungsgerät**
Adapter for connecting an optical recording device with an observation device
Adaptateur destiné à relier un appareil d'enregistrement optique à un appareil d'observation

(30) Priorität: 11.06.2007 AT 9042007
(43) Veröffentlichungstag der Anmeldung: 17.12.2008
(73) Patentinhaber: Swarovski-Optik KG, 6067 Absam i. Tirol (AT)
(72) Erfinder: Plangger, Urban, 6020 Innsbruck (AT)
(74) Vertreter: Burger, Hannes

(56) Entgegenhaltungen:
- EP-A- 0 031 151
- EP-A- 1 518 491
- DE-A1- 3 544 162
- DE-U1- 20 005 152
- DE-U1- 29 616 666
- FR-A- 2 793 567
- FR-A- 2 857 248
- US-A- 5 053 794

## Beschreibung

Die Erfindung bezieht sich auf einen Adapter zur Verbindung des Strahlenganges eines optischen Aufzeichnungsgeräts, insbesondere einer Kamera, mit dem Strahlengang eines optischen Beobachtungsgeräts nach dem Oberbegriff des Anspruchs 1.

Derartige Adapter sind bekannt. Da schon kleinste Bewegungen zwischen Kamera und optischem Beobachtungsgerät, beispielsweise einem Fernrohr, die Bildqualität erheblich reduzieren, erfolgt bei den bekannten Adaptern eine mechanisch feste Verbindung zwischen Kamera und Beobachtungsgerät.

So ist aus US-A-5,053,794 ein Adapter bekannt, der auf das Innengewinde eines am Kameraobjektiv vorgesehenen Filterelements aufgeschraubt wird, während zur Befestigung am Okular des Beobachtungsgeräts drei um 120 ° versetzte radial verlaufende Schrauben vorgesehen sind.

Der Adapter zum Verbinden einer Kamera mit einem medizinischen Gerät, wie in dem Dokument EP 1 518 491 A1 beschrieben, umfasst einerseits einen Kupplungsring zum Anschluss der Kamera und andererseits eine Steckbuchse für ein flanschförmiges Ende des medizinischen Gerätes. In der im Wesentlichen zylinderförmig ausgebildeten Steckbuchse sind vier zungenförmige Vernegelungselemente über den Umfang verteilt angeordnet, die durch Verdrehung einer Ringhülse des Adapters radial nach innen gedrückt werden können, um so an das flanschförmigen Ende fixiert zu werden.

In dem Dokument DE 200 05 152 U1 wird ein Adapter beschrieben, der einen Hohlkörper umfasst, dessen endseitige Formen und Durchmesser auf die verbindende optische Einrichtung und Bilderfassungseinrichtung abgestimmt sind. Für die jeweiligen Verbindungen des Adapters mit der Bilderfassungseinrichtung einerseits und der optischen Einrichtung andererseits als Möglichkeiten, eine kraftflüssige Verbindung, eine Schraubverbindung oder eine Einrast- bzw. Clipeinrichtung aufgezählt.

In dem Dokument EP 0 031 151 A wird eine Vorrichtung zur Befestigung eines Zusatzgerätes an einem Abschnitt eines Endoskopokulars beschrieben, die durch einen Bajonettrnechanismus gebildet ist. Dabei weist der Endbereich des Okulars einen Bajonettsperrkegel auf und ist die Vorderwand der Kamera mit einem dazu passenden bzw. an dem Sperrkegel angreifenden Adapter ausgebildet.

Die Anschlussvorrichtung gemäß dem Dokument DE 35 44 162 A1 zur Verbindung eines Endoskops und eines Fotographischen Gerätes ist derart ausgebildet, dass sie an einem sich kegelförmig erweiternden Endflansch des Okulargehäuses des Endoskops befestigt werden kann. Dazu weist die Anschlussvorrichtung eine hohlzylinderförmige Ausnehmung auf, deren Innendurchmesser dem Endflansch des Okulars entspricht und in dem zum Verbinden der Endflansch des Okulars in axialer Richtung einzuführen ist. Die Befestigung erfolgt schließlich durch das Gehäuse in die Ausnehmung hineinreichende und in radialer Richtung nach innen verstellbarer Klemmglieder. Die Klemmglieder wirken dabei von außen gegen die kegelförmige Erweiterung des Endflansches des Okulars und halten diesen so in der Ausnehmung des Adapters fest.

Bei dem in Dokument FR 2 857 248 A beschriebenen Adapter ist zur Aufnahme des Okulars des Beobachtungsgerätes eine verstellbare Zentriervorrichtung vorgesehen. Zur Aufnahme des Objektivs einer Kamera in dem Adapter ist eine dem Durchmesser des Objektivs entsprechende Bohrung vorgesehen. Sowohl das Objektiv als auch das Okular werden zur Aufnahme in den Adapter in Richtung parallel zu den jeweiligen optischen Achsen bzw. der Längsachse des Adapters in die gegenüberliegenden Enden des Adapters eingeführt.

Bei dem Adapter zur Befestigung eines Objektivs eines Bildaufnahmegerätes an einem Okular eines optischen Instruments gemäß dem Dokument FR 2 793 567 A ist vorgesehen, dass die Befestigung an dem Objektiv mittels eines standardmäßigen Schnellverschlusses erfolgt. An dem entgegen gesetzten Ende des Adapters weist dessen Gehäuse vier in Richtung auf die optische Achse bzw. die Achse des Adapters verschwenkbare Klemmbacken auf. Nach Befestigen des Adapters an dem Objektiv des Bildaufzeichnungsgerätes kann das Gehäuse des Adapters über das Okular eines optischen Elementes gestülpt werden, worauf durch Verdrehen eines Stellrings das Okular zwischen den Klemmbacken koaxial fixiert wird. Das Aufsetzen des Adapters auf dem Okular erfolgt dabei in Richtung parallel zur Achse des Okulars des optischen Instruments.

Das Dokument DE 296 16 666 U1 beschreibt eine Klemmvorrichtung zum koaxialen Verbinden von zwei optischen Bauteilen. Diese weist einen einstückigen Klemmkörper aus federelastischem Material und einen um den Klemmkörper herum angeordneten Verschlussring auf. An der Innenseite des Verschlussrings sind Steuerflächen ausgebildet, durch die die Klemmelemente beim Verdrehen des Verschlussrings in einer Schließrichtung in Richtung auf die gemeinsame Achse beaufschlagt werden. Dabei ist der Verschlussring bzgl. der Richtung der gemeinsamen Achse ortsfest gegenüber dem Klemmkörper angeordnet.

Weiterhin ist ein Adapter im Handel, der für ein mit einer abschraubbaren Augenmuschel versehenes Monokular bestimmt ist. Der im Handel erhältliche Adapter wird einerseits auf das Gewinde aufgeschraubt, das am Kameraobjektiv für Filter, Sonnenblenden und dergleichen vorgesehen ist, und zum anderen auf das Gewinde am Okular nach Abschrauben der Augenmuschel.

Das Auf- und Abschrauben des Adapters ist umständlich und zeitraubend. Auch sind, die bekannten Adapter nur für Kameras bzw. Beobachtungsgeräte geeignet, die entsprechende Gewinde aufweisen.

Aufgabe der Erfindung ist es daher, einen Adapter bereitzustellen, der an beliebigen Kameraobjektiven einfach und schnell befestigbar ist.

Diese Aufgabe wird durch einen Adapter zur Verbindung des Strahlenganges eines optischen Aufzeichnungsgerätes, insbesondere einer Kamera, mit dem Strahlengang eines Beobachtungsgeräts mit einem Befestigungsabschnitt zur Befestigung an einem der beiden Geräte nach Anspruch 1 gelöst.

Somit weist der Adapter bevorzugt zum einen einen Befestigungsabschnitt auf, mit dem er an dem Beobachtungsgerät befestigbar ist, und zum anderen zur Zentrierung der optischen Achse des Objektivs der Kamera auf die optische Achse des Okulars des Beobachtungsgeräts einen Einsteckabschnitt, in den das Kameraobjektiv steckbar ist.

Das heißt, das Kameraobjektiv ist in dem Adapter verschiebbar gelagert, also in Längsrichtung nicht fixiert. Es hat sich nämlich herausgestellt, dass die Bildqualität im Wesentlichen nur davon abhängt, dass die optischen Achsen von Kameraobjektiv und Okular des Beobachtungsgeräts miteinander fluchten, also eine Zentrierung der optischen Achse des Objektivs der Kamera auf die optische Achse des Okulars erfolgt. Eine Verschiebung in Richtung der gemeinsamen optischen Achse hat hingegen auf die Bildqualität wenig Einfluss. Das heißt, die Feinmotorik eines Menschen, der die Kamera mit der einen und gegebenenfalls das Beobachtungsgerät mit der anderen Hand hält, reicht völlig aus, um einwandfreie Bilder zu erhalten. Dabei kann das Kameraobjektiv bis zum Anschlag an das Okular des Beobachtungsgeräts in den Adapter geschoben werden. Es kann jedoch auch ein gesonderter Anschlag im Adapter vorgesehen sein.

Der Einsteckabschnitt des erfindungsgemäßen Adapters weist vorzugsweise einen veränderbaren Innendurchmesser auf, um Kameraobjektive mit unterschiedlichem Durchmesser zentrieren zu können.

Der erfindungsgemäße Adapter ist insbesondere für Beobachtungsgeräte bestimmt, deren Okular mit einer Augenmuschel versehen ist. Die Augenmuschel besteht aus weichem Gummi oder einem anderen gummielastischen Material und verhindert eine Beeinträchtigung durch seitliches Falschlicht und ermöglicht ein bequemes Abstützen des Geräts an der Stirn.

Um am Okular schnell befestigt werden zu können, ist der Befestigungsabschnitt des erfindungsgemäßen Adapters vorzugsweise auf das Okular aufsteckbar ausgebildet, und zwar in radialer Richtung zur optischen Achse des Okulars. Dazu weist der Adapter zwei Federzungen auf, die auf der einen bzw. anderen Seite des Okulars federnd angreifen. Damit ist der Adapter zur optischen Achse des Okulars ausgerichtet. Die Fixierung in Längsrichtung kann durch die Augenmuschel bewerkstelligt werden. Das heißt, die Federzungen sind vorzugsweise so ausgebildet, dass sie bei auf das Okular aufgestecktem Adapter die Augenmuschel federnd hintergreifen. Der Befestigungsabschnitt kann jedoch auch anders ausgebildet sein. So kann der Adapter z.B. einen trichterförmigen Befestigungsabschnitt aufweisen, der auf die Augenmuschel gesteckt wird.

Die Augenmuschel kann mit einem Augenmuschelhalter am Okular befestigt sein, Der Augenmuschelhalter ist vorzugsweise so ausgebildet, dass der Abstand von Augenmuschel und Okular geändert werden kann, beispielsweise durch Verschieben oder eine Schraubwendel. Dies ist insbesondere für Brillenträger von Bedeutung, da das Blickfeld umso größer wird, je näher das Auge zum Okular rückt.

Der Augenmuschelhalter kann erfindungsgemäß zur Aufnahme des Adapters benutzt werden. So kann der Adapter durch einen elastischen Ring gebildet werden, der mit seiner Außenwand an dem Adapterhalter anliegt, sodass die Außenwand den Befestigungsabschnitt bildet, wobei das Kameraobjektiv in den elastischen, von dem Augenmuschelhalter mit Klemmsitz gehaltenen Ring gesteckt wird, also die Innenwand des elastischen Rings den Einsteckabschnitt des Adapters bildet.

Aufgrund seiner Elastizität kann der elastische Ring an Kameraobjektive mit unterschiedlichem Durchmesser angepasst werden. Er kann dazu beispielsweise als Schlauchring oder aus einem gummielastischen Material bestehen.

Um den erfindungsgemäßen Adapter für Kameras einsetzen zu können, deren Objektivdurchmesser sehr unterschiedlich ist, kann der Adapter auch durch einen Satz elastischer Ringe mit unterschiedlichem Innendurchmesser gebildet werden.

Falls das optische Beobachtungsgerät ein Fernglas ist, kann der als elastischer Ring ausgebildete Adapter z. B. am Riemen des Fernglases befestigt werden.

Wenn der erfindungsgemäße Adapter einen auf das Okular aufsteckbaren Befestigungsabschnitt aufweist, kann ein solch elastischer Ring den Einsteckabschnitt bilden. Der elastische Ring ist dann vorzugsweise in einer Längsrichtung des Adapters verschiebbar ausgebildet, um durch axiale Verschiebung des Rings den optimalen Abstand des Kameraobjektivs vom Okular einstellen zu können. Dazu kann der Adapter als Hülse ausgebildet sein. Auch bei dieser Ausführungsform kann ein Satz von Ringen mit unterschiedlichem Innendurchmesser verwendet werden, um Kameraobjektiven mit unterschiedlichem Durchmesser Rechnung zu tragen.

Gemäß einer vorteilhaften Weiterbildung des Adapters ist vorgesehen, dass der Einsteckabschnitt durch einen schlauchförmigen elastischen Ring gebildet ist, wobei der Innendurchmesser des elastischen Rings in Abhängigkeit von einem durch eine Pumpe erzeugten Druck veränderbar ist. Bei dieser Pumpe kann es sich um eine manuell betätigbare Pumpe aber auch um eine motorisch betriebene Pumpe handeln, wobei dazu auch eine Steuerung vorgesehen ist.

Gemäß einer Variante des Adapters ist vorgesehen, dass der Einsteckabschnitt zwei um 180° versetzte, radial bewegbare Backen aufweist. An ihren Stirnseiten weisen diese Backen je zwei schräg angeordnete und zueinander gewandte Backenflanken auf. Die Backen bzw. Backenflanken sind bevorzugt symmetrisch zueinander ausgebildet.

Nach einer anderen bevorzugten Ausführungsform der Erfindung kann der Einsteckabschnitt drei um 120 ° versetzte Backen aufweisen, die in radialer Richtung, auf das Kameraobjektiv zu bewegbar sind um es zu zentrieren. Statt drei können auch mehr um das Kameraobjektiv verteilte Backen, die bevorzugt in einem gleichem Winkelabstand angeordnet sind, vorgesehen sein.

Die Backen können als an dem Adapter verschwenkbar angelenkte Wipphebel ausgebildet sein, die vorzugsweise auf das Kameraobjektiv zu federbelastet sind, beispielsweise durch einen die Backen umspannenden Federring, z.B. in Form einer Wurmfeder.

Statt federbelasteter Backen können die Backen auch auf den Durchmesser des Kameraobjektivs einstellbar ausgebildet sein. Dazu sind die Backen vorzugsweise in radialer Richtung synchron bewegbar.

In einer alternativen Ausführungsform des Adapters kann auch vorgesehen sein, dass in dem Einsteckabschnitt jeweils bezüglich einer zu der Längsachse des Adapters parallel ausgerichteten Achse schwenkbare Backen angeordnet sind. Gemäß einer vorteilhaften Weiterbildung sind die Backen lamellenartig geformt und in der Art einer Irisblende angeordnet.

Zur synchronen Steuerung der Bewegung der Backen ist vorzugsweise ein um die Längsachse des Adapters drehbarer Betätigungsring vorgesehen. Der Betätigungsring kann an seiner Innenseite sich in Umfangsrichtung keilförmig von innen nach außen erstreckende, durch Stufen getrennte Steuerflächen aufweisen, die jeweils an einem der Backen angreifen. Dazu können die Backen gegen die Steuerflächen beispielsweise federbelastet sein. Durch Drehen des Betätigungsrings, der die Backen vorzugsweise umgreift, können die Backen synchron radial nach innen bewegt werden.

Stattdessen können die Backen auch als Blattfedern ausgebildet sein. Dabei kann jede Blattfeder in Umfangsrichtung mit einem Ende an dem Betätigungsring befestigt sein, während das andere Ende der jeweiligen Blattfeder stationär, das heißt drehfest mit dem Befestigungsabschnitt des Adapters verbunden ist. Durch Drehen des Betätigungsrings können die Blattfedern damit radial nach innen aufgewölbt werden, um an den Durchmesser des Kameraobjektivs angepasst zu werden.

Um die Drehposition des Betätigungsrings zu sichern, kann eine Rasterung zwischen dem Betätigungsring und dem mit dem Befestigungsabschnitt drehfest verbundenen Teil des Adapters vorgesehen sein. Ferner kann an dem Betätigungsring und/oder dem mit dem Befestigungsabschnitt drehfest verbundenen Teil des Adapters eine Skala oder dergleichen Markierung vorgesehen sein, um den zuvor ermittelten Drehwinkel des Betätigungsrings für einen bestimmten Kameraobjektivdurchmesser einzustellen.

Nach einer weiteren Ausführungsform der Erfindung können die Backen radial verschiebbar geführt sein. Zur Verschiebung der Backen kann der Betätigungsring in Umfangsrichtung schräg von innen nach außen verlaufende Steuernuten aufweisen, in die jeweils ein Backen z.B. mit einem Vorsprung eingreift.

Zur Führung der Backen können Radialausnehmungen in einem Zwischenring vorgesehen sein, der zwischen dem Befestigungsabschnitt und dem Betätigungsring angeordnet ist.

In einer vorteilhaften Weiterbildung des Adapters ist vorgesehen, dass zur radialen Verstellung der Backen ein Motor in dem Adapter angeordnet ist. Zusätzlich kann auch noch zwischen dem Motor und einem die Backen betätigenden Getriebe eine Rutschkupplung zwischengeschaltet sein, um so die auf das zwischen den Backen eingeschlossene Objektiv einwirkende Kraft zu beschränken.

In einer alternativen Ausführung des Adapters ist dieser zweikomponentig, d.h. durch einen ersten und einen zweiten Adapterteil ausgebildet. Demnach ist vorgesehen, dass im ersten Adapterteil die erste Zentriervorrichtung und in dem zweiten Adapterteil die zweite Zentriervorrichtung angeordnet ist, wobei die erste und die zweite Zentriervorrichtung jeweils durch einen Befestigungsabschnitt zur Befestigung an dem Okular bzw. an dem Objektiv ausgebildet ist. An dem ersten und dem zweiten Adapterteil ist jeweils eine weitere Zentriervorrichtung ausgebildet, wobei die weitere Zentriervorrichtung des ersten Adapterteils zur bedarfsweise zentriert ausgerichteten Anlage bzw. Aufnahme an der weiteren Zentriervorrichtung des zweiten Adapterteils ausgebildet ist. Dazu sind die weiteren Zentriervorrichtungen der beiden Adapterteile mit zueinander komplementären Anlageflächen ausgebildet. Vorteilhaft ist dabei die Anlageflächen durch zur gemeinsamen Längsachse des Adapters symmetrische Kegelflächen zu bilden. Gemäß einer vorteilhaften Weiterbildung kann weiters vorgesehen sein, dass im Bereich der Anlageflächen Magnete zur Erzeugung anziehender Kräfte zwischen dem ersten und dem zweiten Adapterteil angeordnet sind.

Mit dem erfindungsgemäßen Adapter kann das Objektiv einer beliebigen Kamera mit dem Okular eines beliebigen optischen Beobachtungsgeräts verbunden werden. So kann das optische Beobachtungsgerät z.B. ein Fernrohr oder ein Monokular sein. Insbesondere ist der Adapter jedoch zum Anschluss eines Fernglases an eine Kamera geeignet. Die Kamera kann insbesondere eine Digitalkamera sein, jedoch ist der erfindungsgemäße Adapter gleichermaßen für einen Fotoapparat mit einem Film geeignet. Auch kann die Kamera eine Videokamera oder eine Filmkamera sein. Die jeweilige Kamera kann sowohl einen digitalen Zoom wie einen optischen Zoom mit ausfahrbarem Zoomobjektiv aufweisen. Der erfindungsgemäße Adapter besteht vorzugsweise im Wesentlichen aus Kunststoff und kann z.B. durch Spritzguss hergestellt sein.

Nachstehend ist die Erfindung anhand der beigefügten Zeichnung beispielhaft näher erläutert. Darin zeigen zum Teil schematisch:
- Figur 1 und 2: eine perspektivische Ansicht eines Adapters nach einer ersten Ausführungsform von vorn bzw. hinten;
- Figur 3: eine Seitenansicht des am Okular eines optischen Beobachtungsgeräts befestigten Adapters nach Figur 1 und 2;
- Figur 4: eine Seitenansicht des Adapters;
- Figur 5: einen Schnitt durch den Adapter entlang der Linie V-V in Figur 9;
- Figur 6 und 7: einen Schnitt durch den Adapter entlang der Linie VI-VI bzw. VII-VII nach Figur 4;
- Figur 8: einen Schnitt entlang der Linie VIII-VIII in Figur 6;
- Figur 9: eine Vorderansicht des Adapters nach Figur 1-8;
- Figur 10: einen Längsschnitt durch einen am Okular eines optischen Beobachtungsgeräts befestigten Adapter nach einer zweiten Ausführungsform;
- Figur 11: eine perspektivische Ansicht eines Adapters nach einer dritten Ausführungsform;
- Figur 12: einen Längsschnitt durch einen an dem Okular eines optischen Beobachtungsgeräts befestigten Adapter nach einer vierten Ausführungsform;

- Figur 13: einen Längsschnitt durch einen an dem Okular eines optischen Beobachtungsgeräts befestigten Adapters nach einer fünften Ausführungsform;
- Figur 14: eine Vorderansicht des Adapters nach Figur 13;
- Figur 15: einen Längsschnitt durch einen an dem Okular eines optischen Beobachtungsgeräts befestigten Adapter nach einer sechsten Ausführungsform; und
- Figur 16: eine Vorderansicht des Adapters nach Figur 15;
- Figur 17: eine Vorderansicht eines Adapters nach einer siebten Ausführungsform;
- Figur 18: eine Vorderansicht eines Adapters in einer achten Ausführungsform;
- Figur 19: eine Vorderansicht eines Adapters nach einer neunten Ausführungsform mit einem Einsteckabschnitt in der Art einer Irisblende;
- Figur 20: einen Längsschnitt des Adapters in einer zehnten Ausführungsform mit einem pneumatisch betätigbaren Einsteckabschnitt;
- Figur 21: einen Längsschnitt eines zweikomponentig ausgebildeten Adapters.

Einführend sei festgehalten, dass in den unterschiedlich beschriebenen Äusführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

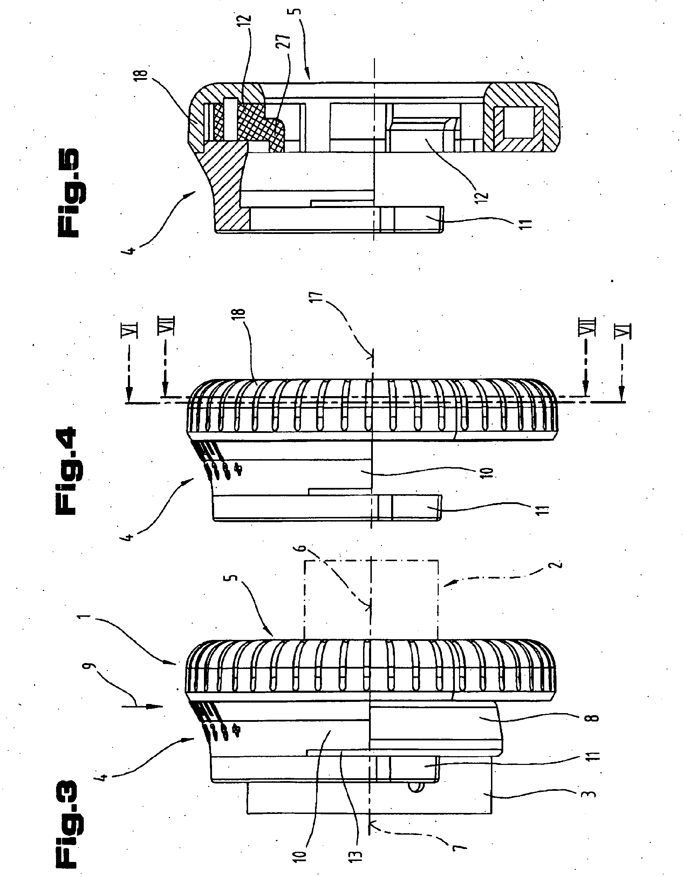

Gemäß Figur 3 weist ein Adapter 1 zum Anschluss des gestrichelt dargestellten Objektivs 2 einer Kamera. an das Okular 3 eines nicht dargestellten optischen Beobachtungsgeräts einen Befestigungsabschnitt 4 und einen Einsteckabschnitt 5 auf, um die optische Achse 6 des Kameraobjektivs 2 zu zentrieren, sodass die optische Achse 6 des Kameraobjektivs 2 und die optische Achse 7 des Okulars 3 zusammenfallen.

Gemäß Figur 3 ist an dem Okular 3 eine Augenmuschel 8 vorgesehen. Der Befestigungsabschnitt 4 des Adapters 1 ist auf das Okular 3 in radialer Richtung gemäß dem Pfeil 9 aufgesteckt worden.

Dazu weist der Befestigungsabschnitt 4 einen etwa halbkreisförmigen Bogenbereich 10 auf, der die Augenmuschel 8 übergreift, ferner zwei Clips oder Federzungen 11, die das Okular 3 hinter der Augenmuschel 8 auf beiden Seiten umfassen. Um den Federweg der Federzungen 11 zu vergrößern, ist zwischen jeder Zunge 11 und dem halbkreisbogenförmigen Bereich 10 jeweils ein Schlitz 13 vorgesehen.

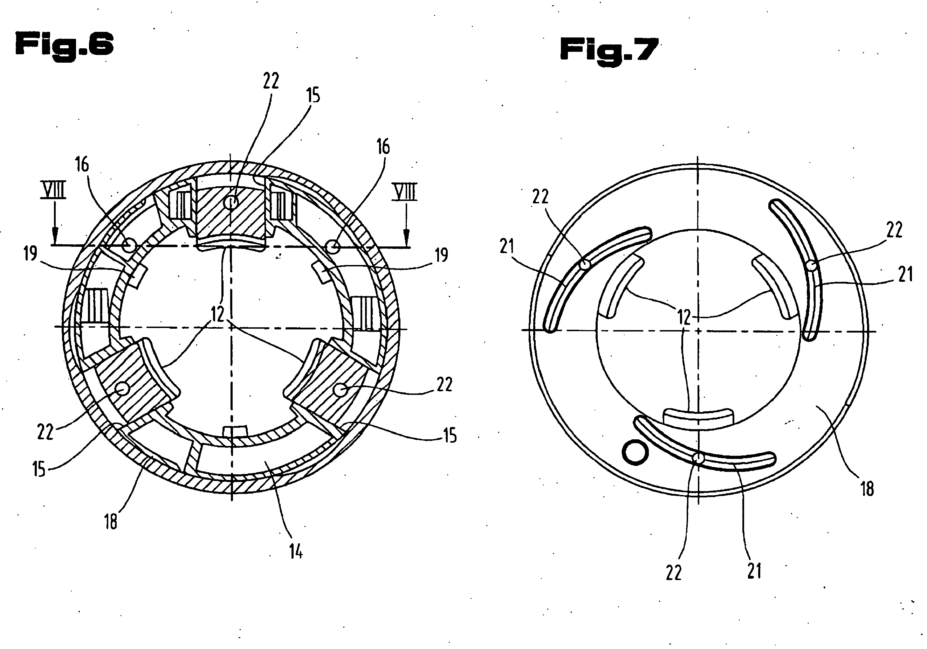

Der Einsteckabschnitt 5 des Adapters weist, wie insbesondere aus Figur 6, 7 und 9 ersichtlich, drei um 120 ° versetzte Backen 12 auf, die das Kameraobjektiv 2 zentrieren.

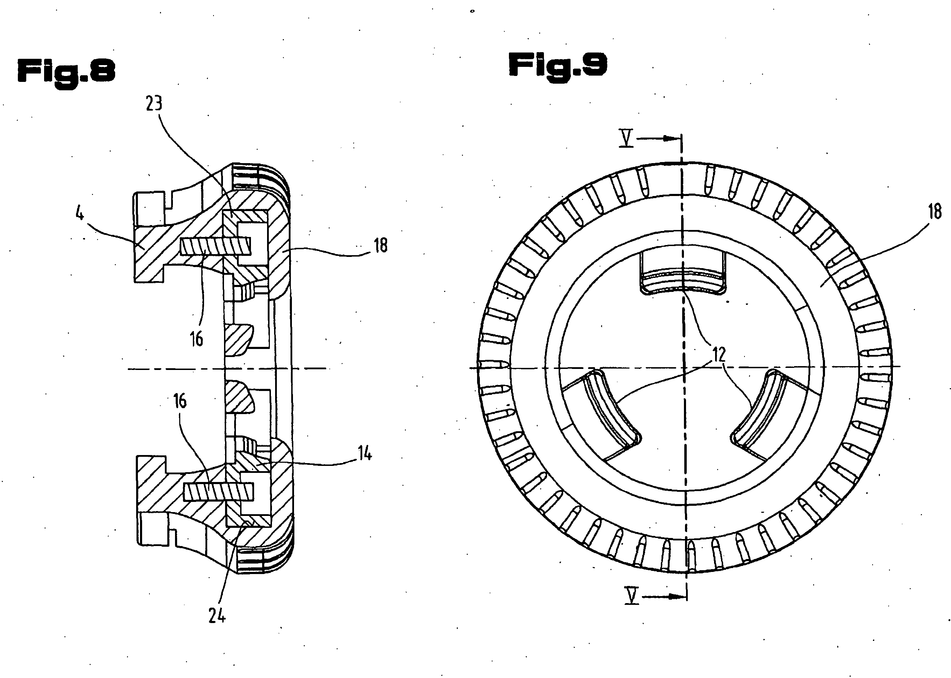

Die Backen 12 sind in einem Zwischenring 14 in Radialausnehmungen 15 radial geführt. Der Zwischenring 14 ist am Befestigungsabschnitt 4 mit Befestigungselement 16 drehfest fixiert (Figur 6 und 8).

Auf dem Zwischenring 14 ist um die Längsachse 17 (Figur 4) des Adapters 1 drehbar ein Betätigungsring 18 gelagert. Zur drehbaren Lagerung des Betätigungsrings 18 sind an dem Betätigungsring 18 Federzungen 19 angeformt, die mit ihren hakenförmig gebogenen Enden 20 den Zwischenring 14 an seiner dem Befestigungsabschnitt 4 zugewandten Seite zwischen den Backen 12 hintergreifen.

Der Betätigungsring 18 weist drei schräg von innen nach außen verlaufende Steuernuten 21 auf, in die zapfenförmige Vorsprünge 22 eingreifen, die an den Backen 12 vorgesehen sind. Durch Drehen des Betätigungsrings 18 werden damit die Backen 12 in dem Zwischenring 14 radial verschoben.

Am Außenumfang 23 des Zwischenrings 14 ist eine Rasterung vorgesehen, in die eine Rasterung am Innenumfang 24 des Betätigungsrings 18 einrastbar ist (Figur 8). Dadurch ist die Drehposition des Betätigungsrings 18 gegenüber dem Zwischenring 14 und damit die Position der Backen 12 fixierbar.

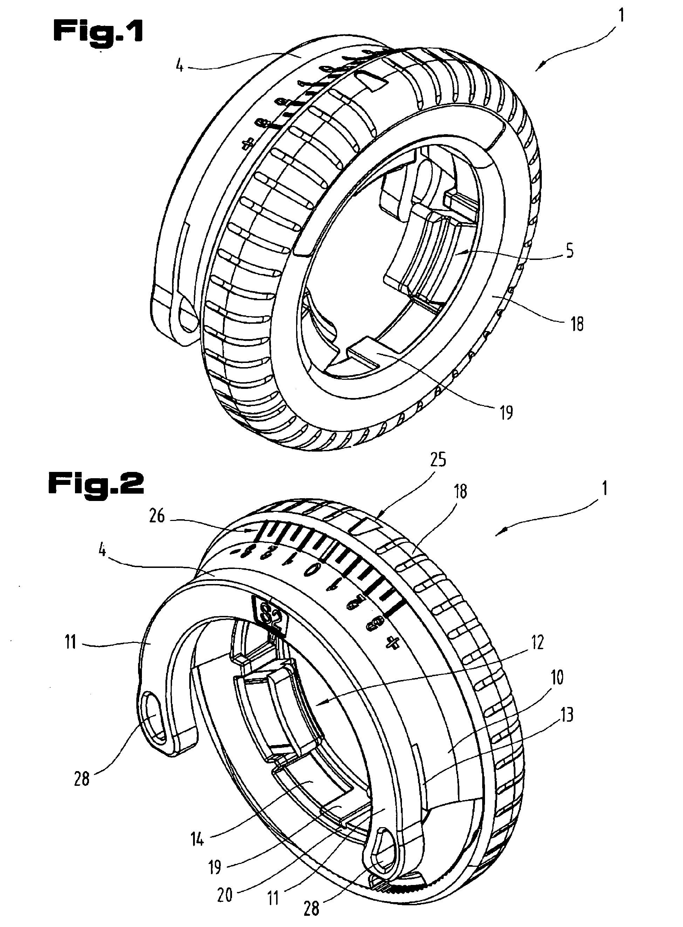

Ferner ist gemäß Figur 1, 2 und 4 am Betätigungsring 18 und an dem Befestigungsabschnitt 4 jeweils eine Markierung 25 bzw. 26 angebracht, sodass eine bestimmte Drehposition des Betätigungsrings 18 gegenüber dem Befestigungsabschnitt 4 eingestellt werden kann, bei der die Position der Backen 12 der Position zum Zentrieren eines Kameraobjektivs 2 mit einem bestimmten Außendurchmesser entspricht.

An der dem Okular 3 zugewandten Seite jedes Backens 12 ist ein radial nach innen ragender Vorsprung 27 vorgesehen (Figur 5). Die Vorsprünge 27 bilden einen Anschlag für das zwischen die Backen 12 geschobene Kameraobjektiv 2 in Längsrichtung des Adapters 1.

Die Federzungen 11 sind mit Öffnungen 28 versehen, an denen eine Schlaufe befestigt werden kann, mit der der Adapter 1 bei Nichtgebrauch beispielsweise am Tragriemen des Beobachtungsgeräts aufgehängt werden kann.

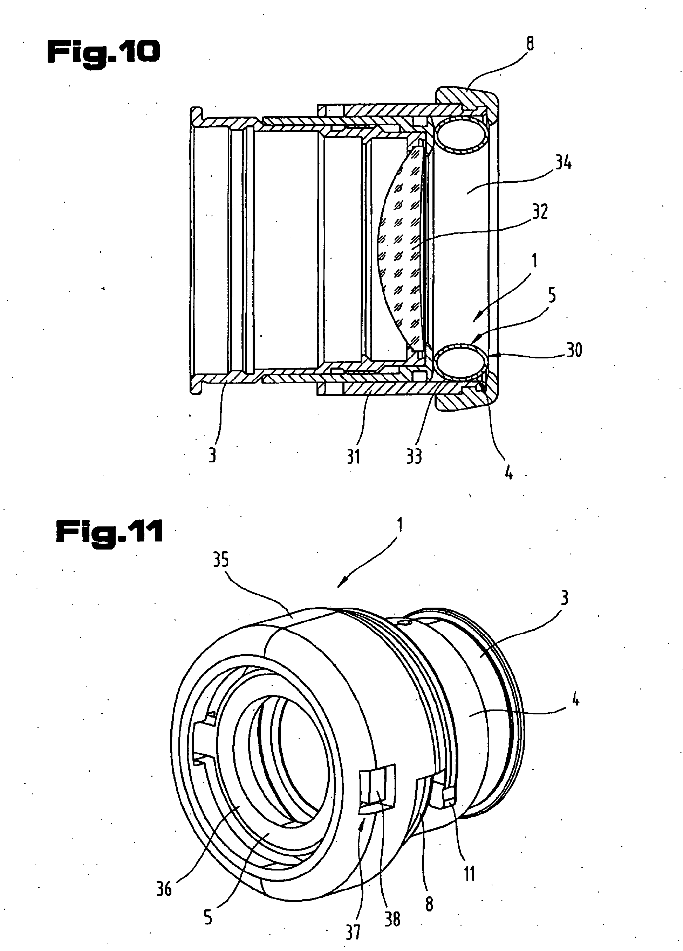

Bei der Ausführungsform nach Figur 10 ist der Adapter 1 durch einen elastischen Ring 30 gebildet. Die Augenmuschel 8 ist mit einem Augenmuschelhalter 31 am Okular 3 befestigt. Der elastische Ring 30 ist im Augenmuschelhalter 31 vor der Okularlinse 32 angeordnet. Der elastische Ring 30, der als Schlauch ausgebildet sein kann, liegt mit seiner Außenwand 33, die den Befestigungsabschnitt des Adapters 1 bildet, mit Klemmsitz innen an dem Augenmuschelhalter 31. an, während die Innenwand 34 des Rings 30 den Einsteckabschnitt des Adapters 1 bildet.

Der elastische Ring 30 kann statt aus einem Schlauch auch aus einem Schaumstoff oder Vollmaterial bestehen, beispielsweise aus Gummi oder einem gummielastischen Material.

Bei der Ausführungsform nach Figur 11 ist der Befestigungsabschnitt 4 in gleicher Weise ausgebildet wie der Befestigungsabschnitt 4 der Ausführungsform nach Figur 1-9, sodass hinsichtlich des Befestigungsabschnitts 4 der Ausführungsform nach Figur 11 auf die vorstehende Beschreibung zu der Ausführungsform nach Figur 1-9 verwiesen werden kann.

Der Befestigungsabschnitt 4 ist bei dieser Ausführungsform mit einer Hülse 35 versehen, in der ein elastischer Ring 36 angeordnet ist Der elastische Ring 36 kann in gleicher Weise ausgebildet sein wie der elastische Ring 30 nach Figur 10, sodass hinsichtlich des Rings 36 auf die Beschreibung der Ausführungsform nach Figur 10 verwiesen werden kann.

In den elastischen Ring 36 wird das Kameraobjektiv 2 gesteckt, er bildet also den Einsteckabschnitt bei dieser Ausführungsform. Der Ring 36 kann in Längsrichtung verschiebbar ausgebildet sein. Dazu sind gemäß Figur 11 Längsschlitze 37 in der Hülse 35 vorgesehen, durch die ein mit dem Ring 36 verbundenes Betätigungselement 38 nach außen ragt, um den Ring 36 verschieben zu können. Wie in Figur 11 zu sehen, können der Befestigungsabschnitt 4 und die Hülse 35 einstückig ausgebildet sein.

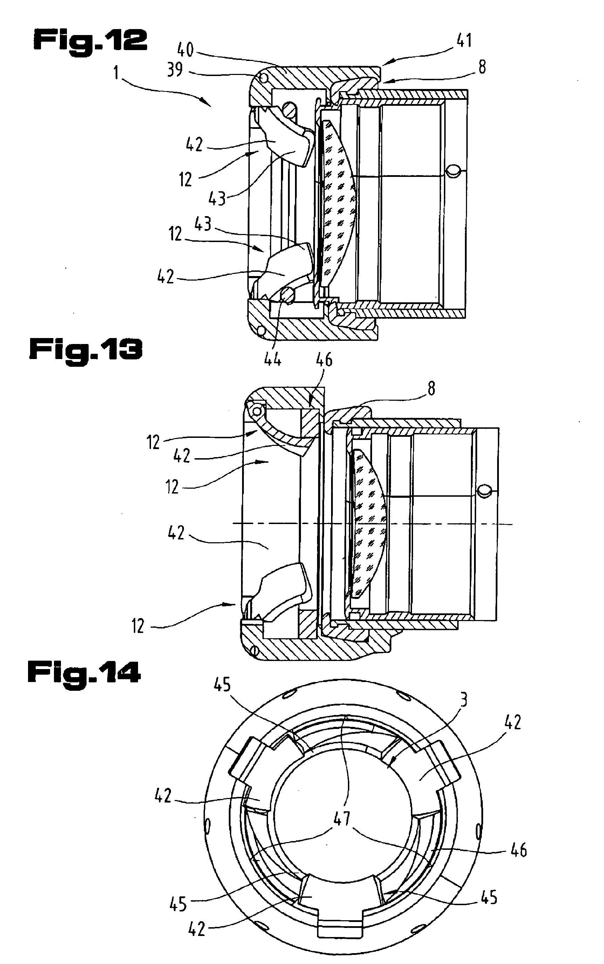

Bei den beiden Ausführungsformen nach Fig. 12 bzw. 13 und 14 ist der Adapter 1 durch eine Hülse 40 gebildet. Die Hülse 40 weist an ihrer Innenseite einen sich trichterförmig erweiternden Abschnitt 41 auf, der auf die Augenmuschel 8 gesteckt wird und den Befestigungsabschnitt 4 bildet.

Die Backen 12 werden bei diesen beiden Ausführungsformen durch Wipphebel 42 gebildet, die an ihrem vorderen, also dem Kameraobjektiv 2 zugewandten Ende um quer zur Adapterlängsachse verlaufende Achsen 39 verschwenkbar an der Hülse 40 angelenkt sind. Die Wipphebel 42 sind zum Okular 3 hin nach außen gebogen, so dass sie mit ihren Endabschnitten 43 an dem Kameraobjektiv 2 flächig zur Anlage kommen.

Bei der Ausführungsform nach Fig. 12 werden die drei Wipphebel 42 von einem Federring 44 umspannt, der sie zur Anlage an dem Kameraobjektiv radial nach innen belastet.

Demgegenüber ist bei der Ausführungsform nach Fig. 13 und 14 die radiale Position der Wipphebel 42 einstellbar. Dazu ist in der Hülse 40 ein Betätigungsring 46 drehbar gelagert, der die drei Wipphebel 42 im Abstand von ihrer Schwenkachse 39 umgreift. Der Betätigungsring 46 weist an seiner Innenseite sich in Umfangsrichtung keilförmig von innen nach außen erstreckende, durch Stufen 45 getrennte Steuerflächen 47 auf, die jeweils an einem der Wipphebel 42 anliegen.

Der Betätigungsring 46 ist mit einem nicht dargestellten Betätigungselement verbunden, das durch einen nicht dargestellten sich in Umfangsrichtung erstreckenden Schlitz in der Hülse 40 nach außen ragt. Ferner kann eine Rasterung oder dergleichen Rasteinrichtung zwischen Hülse 40 und Betätigungsring 46 vorgesehen sein, um die Drehposition des Betätigungsrings 46 zu fixieren.

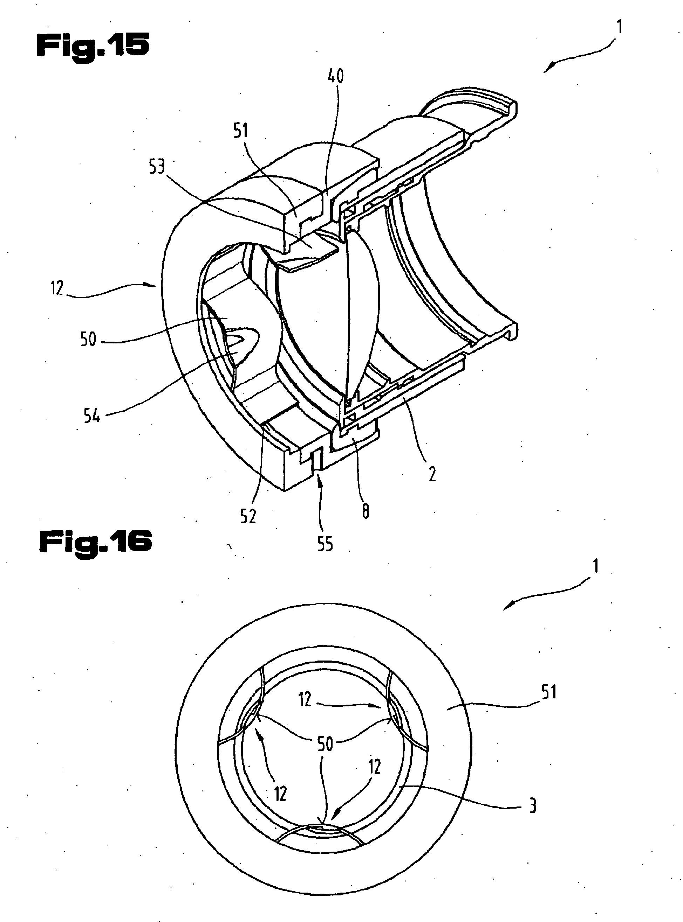

Bei der Ausführungsform nach Fig. 15 und 16 ist der Befestigungsabschnitt 4 in gleicher Weise ausgebildet wie der Befestigungsabschnitt nach Fig. 12, so dass hinsichtlich des Befestigungsabschnitts dieser Ausführungsform auf die vorstehende Beschreibung zum Befestigungsabschnitt gemäß Fig. 12 verwiesen werden kann.

Bei der Ausführungsform nach Fig. 15 sind die Backen 12 als Blattfedern 50 ausgebildet. Ferner ist ein Betätigungsring 51 auf der Hülse 40 drehbar gelagert. Jede Blattfeder 50 ist in Umfangsrichtung mit seinem einen Ende 52 an dem Betätigungsring 51 und mit seinem anderen Ende 53 an der Hülse 40 befestigt.

Durch Drehen des Betätigungsrings 51 können die Blattfedern 50 so nach innen gewölbt werden, dass sie an dem Kameraobjektiv anliegen, um es zu zentrieren. An der dem Kameraobjektiv zugewandten Seite weisen die Blattfedern 50 zur flächigen Anlage an dem Kameraobjektiv konkave Einbuchtungen 54 auf.

Auch bei dieser Ausführungsform ist eine Rasteinrichtung vorgesehen, die durch ein im Betätigungsring 51 angeordnetes Rastelement 55 gebildet wird, das auf die Hülse 40 zu federbelastet ist und in der Hülse 40 in vorgesehene Rastausnehmungen eingreift.

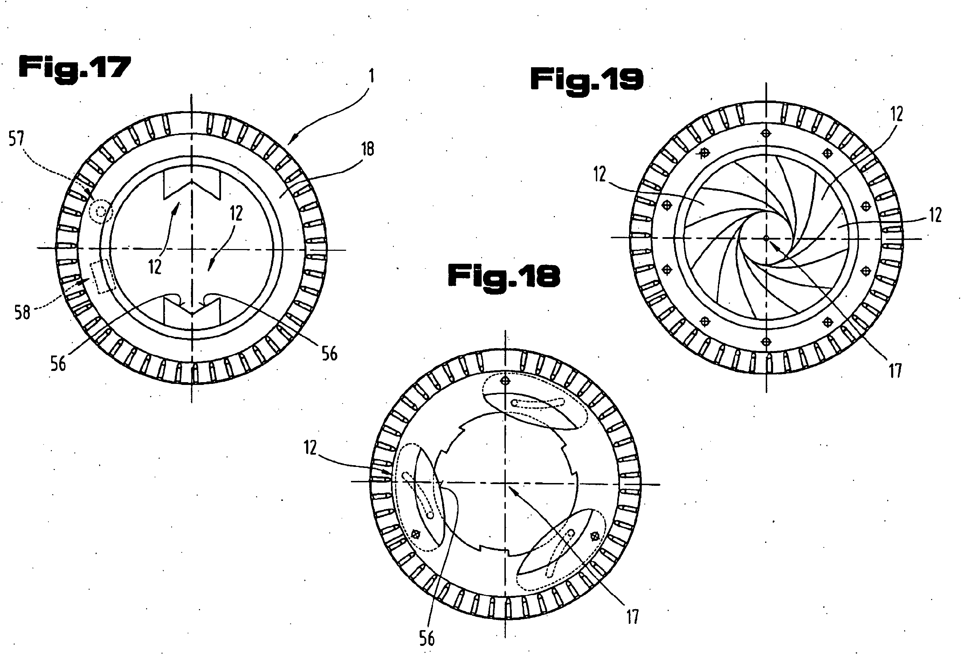

Die Fig. 17 zeigt eine zu dem in den Fig. 1 bis 9 dargestellten Adapter alternative Ausführungsform des Adapters 1. Der Einsteckabschnitt 5 des Adapters 1 weist zwei um 180° versetzte Backen 12 auf. Die Backen 12 sind mit je zwei schräg angeordneten und zueinander gewandten Backenflanken 56 ausgebildet, sodass das Kameraobjektiv 2 zwischen den Backen 12 zentriert werden kann. Die Backenflanken 56 sind außerdem bevorzugt ebenflächig und zueinander symmetrisch geformt. Die Verstellung der Backen 12 erfolgt ebenso wie bereits in dem Ausführungsbeispiel nach den Fig. 1 bis 9 beschrieben durch Verdrehen des Betätigungsrings 18.

In einer weiteren alternativen Ausführungsform des Adapters 1 kann vorgesehen sein, dass die radiale Verstellung der Backen 12 mit Hilfe eines Motors 57 (strichliert eingezeichnet) erfolgt. Für den vorzugsweise elektrischen Motor 57 sind in dem Adapter 1 eine Batterie als Stromquelle als auch eine Steuerung 58 vorgesehen. Gemäß dieser Ausführungsform des Adapters 1 dient der Betätigungsring 18 als Schalter, der bei Verdrehen in der einen Richtung das Öffnen der Backen 12 und bei Verdrehen in eine andere Richtung das Zusammenfahren der Backen 12 in Richtung auf das zwischen diesen eingesteckte Kameraobjektiv 2 bewirkt. Der Motor 57 ist vorzugsweise durch Zwischenschaltung einer Rutschkupplung an das die Backen 12 betätigende Getriebe gekoppelt, wodurch eine Kraftbegrenzung der von den Backen 12 auf das Kameraobjektiv 2 ausgeübten Kraft erreicht wird und somit Beschädigungen des Objektivs 2 vermieden werden. Eine Begrenzung der auf das Objektiv 2 einwirkenden Kräfte kann alternativ auch mit Hilfe entsprechend angeordneter Kraftsensoren (nicht dargestellt) erfolgen.

Fig. 18 zeigt ein weiteres zu der Darstellung gemäß den Fig. 1 bis 9 alternatives Ausführungsbeispiel des Adapters 1. Die Backen 12 sind dabei jeweils bezüglich einer zu der Längsachse 17 des Adapters 1 parallel ausgerichteten Achse schwenkbar angeordnet. Die Backenflanke 56 der Backen 12 weist vorzugsweise eine konvexe Krümmung auf. Die Verstellung dieser Backen 12 kann, wie vorstehend beschrieben, manuell oder motorisch angetrieben erfolgen.

Die Fig. 19 zeigt ein Ausführungsbeispiel des Adapters 1 mit einem Einsteckabschnitt 5 der in der Art einer Irisblende ausgebildet ist. Dazu verfügt der Adapter 1 über Backen 12, die lamellenartig geformt und jeweils bezüglich einer zu der Längsachse 17 parallelen Achse schwenkbar sind.

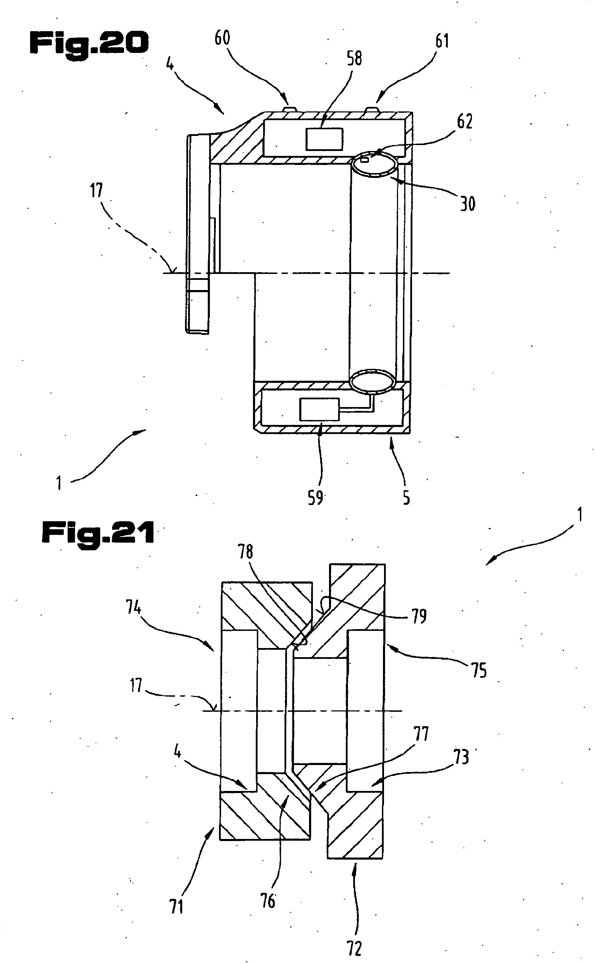

Die Fig. 20 zeigt ein Ausführungsbeispiel des Adapters 1 mit einem pneumatisch betätigten Einsteckabschnitt 5. Der dabei vorgesehene schlauchförmige elastische Ring 30 ist mit einer Pumpe 59 verbunden, sodass diese mehr oder weniger aufgepumpt werden kann. Somit ist der Innendurchmesser des elastischen Rings 30 in Abhängigkeit von dem durch die Pumpe 59 erzeugten Druck veränderbar. Das Erhöhen bzw. das Verringern des Drucks wird durch Betätigen eines Schalters 60 bzw. 61 ausgelöst, wobei durch die Steuerung 58 eine entsprechende Ansteuerung der Pumpe 59 erfolgt. Zur Überwachung des Drucks in dem elastischen Ring 30 kann in diesem bzw. in der Pumpe 59 ein Drucksensor 62 der mit der Steuerung 58 in Signalverbindung steht, vorgesehen sein. Bei der Pumpe 59 handelt es sich also bevorzugt um motorisch betriebene Pumpe. Es kann aber alternativ auch eine manuell betätigbare Pumpe 59, z.B. ein Blasebalg, vorgesehen sein.

Wie einleitend bereits ausgeführt worden ist, ist der Adapter 1 für unterschiedliche Arten optischer Aufzeichnungsgeräte bzw. Kameras, wie beispielsweise eine Digitalkamera, ein Fotoapparat mit Film, eine Videokamera oder eine Filmkamera geeignet. Der Adapter 1 dient somit zur Verbindung des Strahlenganges eines optischen Aufzeichnungsgerätes mit dem Strahlungsgang eines Beobachtungsgerätes. Gemäß den vorstehend beschriebenen Ausführungsbeispielen des Adapters 1 ist vorgesehen, dass der Befestigungsabschnitt 4 an dem Beobachtungsgerät bzw. an dem Okular 3 des Beobachtungsgeräts befestigt wird. Andererseits wird das Objektiv 2 der Kamera in den Einsteckabschnitt 5 des Adapters 1 gesteckt. Der Befestigungsabschnitt 4 und der Einsteckabschnitt 5 dienen jeweils als eine erste bzw. eine zweite Zentriervorrichtung, mit der das Okular 3 des Beobachtungsgeräts als auch das Objektivs 2 des Aufzeichnungsgeräts bezüglich der Längsachse 17 des Adapters 1 zentriert werden. Somit erfolgt eine Zentrierung der optischen Achse 6 des Objektivs 2 des Aufzeichnungsgeräts auf die optische Achse 7 des Okulars 3 des Beobachtungsgerätes. Der Adapter 1 kann alternativ derart ausgebildet sein, dass der Befestigungsabschnitt 4 zur Befestigung an dem Objektiv 2 des Aufzeichnungsgeräts befestigbar ist und andererseits das Okular des Beobachtungsgeräts in den Einsteckabschnitt 5 gesteckt wird. Die wechselseitige Verbindung der Strahlengänge des optischen Aufzeichnungsgerätes und des Beobachtungsgerätes kann aber nicht nur durch Befestigen bzw. Anlegen des Adapters 1 an einem Gehäuseteil des Okulars 3 bzw. an einem Gehäuseteil des Objektivs 2 erfolgen. Alternativ ist es auch möglich, die Zentrierung der optischen Achsen 6, 7 durch Befestigen bzw. Anlegen des Adapters 1 an einem anderen Gehäuseteil des Beobachtungsgeräts bzw. an einem Gehäuseteil des Aufzeichnungsgeräts zu erreichen. Der betreffende Gehäuseteil des Beobachtungsgeräts sollte dazu mit der optischen Achse 7 des Okulars 3 in fester räumlicher Beziehung stehen. Dies gilt analog für den betreffenden Gehäuseteil des Aufzeichnungsgeräts und die optische Achse 6 des Objektivs 2.

Die Fig. 21 zeigt einen zweikomponentig ausgebildeten Adapter 1. Dieser wird gebildet durch einen ersten Adapterteil 71 mit dem Befestigungsabschnitt 4 zur Befestigung an dem Okular 3 und durch einen zweiten Adapterteil 72 mit einem Befestigungsabschnitt 73 zur Befestigung an dem Kameraobjektiv 2. Der Befestigungsabschnitt 4 des ersten Adapterteils 71 bildet eine erste Zentriervorrichtung 74 zur Zentrierung bezüglich der gemeinsamen Längsachse 17 des Adapters 1. Ebenso bildet der Befestigungsabschnitt 73 des zweiten Adapterteils 72 eine zweite Zentriervorrichtung 75. An seiner der ersten Zentriervorrichtung 74 abgewandten Seite weist der erste Adapterteil 71 eine weitere Zentriervorrichtung 76 auf. Ebenso sind an dem zweiten Adapterteil an der der zweiten Zentriervorrichtung 75 abgewandte Seiten eine weitere Zentriervorrichtung 77 vorgesehen. Diese weiteren Zentriervorrichtungen 76, 77 sind so ausgebildet, dass der erste und der zweite Adapterteil 71, 72 zentriert ausgerichtet zur gegenseitigen Anlage gebracht werden können. D.h. die weitere Zentriervorrichtung 76 des ersten Adapterteils 71 kann an der zweiten Zentriervorrichtung 77 des zweiten Adapterteils 72 zur Anlage gebracht werden. Die weiteren Zentriervorrichtungen 76, 77 des ersten bzw. des zweiten Adapterteils 71, 72 sind vorzugsweise mit zueinander komplementären Anlageflächen 78, 79 ausgebildet. Gemäß der Darstellung gemäß Fig. 21 sind die Anlageflächen 78, 79 durch zur Längsachse 17 des Adapters 1 symmetrische Kegelflächen mit gleichem Kegelwinkel gebildet. Beim Zusammenfügen der beiden Adapterteile 71, 72 wird die weitere Zentriervorrichtung 77 des zweiten Adapterteils 72 in der weiteren Zentriervorrichtung 76 des ersten Adapterteils 71 aufgenommen und zur Anlage gebracht, wobei gleichzeitig eine Ausrichtung der Längsachsen auf die gemeinsame Längsachse 17 erfolgt. Im Unterschied zu der Befestigung der Adapterteile 71, 72 an dem Objektiv 2 bzw. dem Okular 3 ist zwischen den weiteren Zentriervorrichtungen 76, 77 nur eine Anlage bzw. eine relativ leicht lösbare Befestigung vorgesehen. Diese Anlage kann zusätzlich noch dadurch unterstützt werden, dass im Bereich der Anlageflächen 78, 79 Magnete zur Erzeugung anziehender Kräfte zwischen dem ersten und dem zweiten Adapterteil 71, 72 angeordnet sind. Die anziehenden Kräfte der Magneten sind dabei derart begrenzt, dass ein relativ leichtgängiges Wiederablösen der beiden Adapterteile 71, 72 von einander möglich ist.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Adapters 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend daraufhingewiesen, dass zum besseren Verständnis des Aufbaus des Adapters 1 dieser bzw. dessen Bestandteile teilweise unmaßstäblich und/oder vergrößert und/oder verkleinert dargestellt wurden.

Die den beschriebenen Lösungen zugrunde liegende Aufgabe kann der Beschreibung entnommen werden.

### Bezugszeichenaufstellung

- 1: Adapter
- 2: Objektiv
- 3: Okular
- 4: Befestigungsabschnitt
- 5: Einsteckabschnitt

- 6: Achse
- 7: Achse
- 8: Augenmuschel
- 9: Pfeil
- 10: Bogenbereich

- 11: Federzunge
- 12: Backen
- 13: Schlitz
- 14: Zwischenring
- 15: Radialausnehmung

- 16: Befestigungselement.
- 17: Längsachse
- 18: Betätigungsring
- 19: Federzunge
- 20: Ende

- 21: Steuernut
- 22: Vorsprung
- 23: Außenumfang
- 24: Innenumfang
- 25: Markierung

- 26: Markierung
- 27: Vorsprung
- 28: Öffnung
- 29:
- 30: Ring

- 31: Augenmuschelhalter
- 32: Okularlinse
- 33: Außenwand
- 34: Innenwand
- 35: Hülse

- 36: Ring
- 37: Längsschlitz
- 38: Betätigungselement
- 39: Achse
- 40: Hülse

- 41: Abschnitt
- 42: Wipphebel
- 43: Endabschnitt
- 44: Federring
- 45: Stufe

- 46: Betätigungsring
- 47: Steuerfläche
- 50: Blattfeder

- 51: Betätigungsring
- 52: Ende
- 53: Ende
- 54: Einbuchtung
- 55: Rastelement

- 56: Backenflanke
- 57: Motor
- 58: Steuerung
- 59: Pumpe
- 60: Schalter

- 61: Schalter
- 62: Drucksensor

- 71: erster Adapterteil
- 72: zweiter Adapterteil
- 73: Befestigungsabschnitt
- 74: erste Zentriervorrichtung
- 75: zweite Zentriervorrichtung

- 76: weitere Zentriervorrichtung
- 77: weitere Zentriervorrichtung
- 78: Anlagefläche
- 79: Anlagefläche

## Patentansprüche

1. Adapter (1) zur Verbindung des Strahlenganges eines optischen Aufzeichnungsgeräts, insbesondere einer Kamera, mit dem Strahlengang eines Beobachtungsgerätes mit einem Befestigungsabschnitt (4) zur Befestigung an einem der beiden Geräte, wobei der Adapter (1) zur Zentrierung der optischen Achse (6) eines Objektivs (2) des Aufzeichnungsgeräts auf die optische Achse (7) eines Okulars (3) des Beobachtungsgeräts zwei Zentriervorrichtungen (74, 75) aufweist, wobei eine erste Zentriervorrichtung (74) dem Okular (3) des Beobachtungsgeräts und eine zweite Zentriervorrichtung (75) dem Objektiv (2) des Aufzeichnungsgeräts zugeordnet ist, und wobei die erste Zentriervorrichtung (74) durch den Befestigungsabschnitt (4) zur zentrierten Aufnahme und Halterung des Adapters (1) am Okular (3) bzw. an einem Gehäuseteil des Beobachtungsgeräts ausgebildet ist und die zweite Zentriervorrichtung (75) zur bedarfsweise zentriert ausgerichteten Anlage bzw. Aufnahme am Objektiv (2) bzw. an einem Gehäuseteil des Aufzeichnungsgeräts ausgebildet ist, **dadurch gekennzeichnet, dass** der Befestigungsabschnitt (4) der dem Okular (3) zugeordneten ersten Zentriervorrichtung (74) einen etwa halbkreisförmig ausgebildeten Bogenbereich (10) mit zwei Federzungen (11) umfasst, wobei die Federzungen (11) dazu ausgebildet sind, auf der einen bzw. anderen Seite des Okulars federnd anzugreifen.

2. Adapter (1) nach Anspruch 1, **dadurch gekennzeichnet, dass** die zweite Zentriervorrichtung (75) durch einen Einsteckabschnitt (5) gebildet ist, in den das Kameraobjektiv (2) steckbar ist.

3. Adapter (1) nach Anspruch 2, **dadurch gekennzeichnet, dass** der Einsteckabschnitt (5) ein Mittel umfasst, das zur Anlage an dem Kameraobjektiv (2) vorgesehen ist und das auf den Durchmesser des Kameraobjektivs (2) einstellbar ist.

4. Adapter (1) nach einem der vorhergehenden Ansprüche, **dadurch gekennzeichnet, dass** die Federzungen (11) bei auf das Okular (3) gestecktem Adapter (1) eine Augenmuschel (8), mit der das Okular (3) versehen ist, hintergreifen.

5. Adapter (1) nach Anspruch 4, **dadurch gekennzeichnet, dass** die Augenmuschel (8) mit einem Augenmuschelhalter (31) am Okular (3) des Beobachtungsgerätes befestigbar ist.

6. Adapter (1) nach einem der Ansprüche 2 bis 5, **dadurch gekennzeichnet, dass** der Einsteckabschnitt (5) durch einen schlauchförmigen elastischen Ring (30) gebildet ist, wobei der Innendurchmesser des elastischen Rings (30) in Abhängigkeit von einem durch eine Pumpe (59) erzeugten Druck veränderbar ist.

7. Adapter (1) nach Anspruch 6, **dadurch gekennzeichnet, dass** zur Ansteuerung der Pumpe (59) eine Steuerung (58) ausgebildet ist.

8. Adapter (1) nach Anspruch 7, **dadurch gekennzeichnet, dass** zur Überwachung des Drucks in dem elastischen Ring (30) ein Drucksensor (62) angeordnet ist, der mit der Steuerung (58) in Signalverbindung steht.

9. Adapter (1) nach einem der Ansprüche 2 bis 4, **dadurch gekennzeichnet, dass** der Einsteckabschnitt (5) eine Hülse (35) aufweist, die innen mit einem elastischen Ring (36) versehen ist.

10. Adapter (1) nach Anspruch 9, **dadurch gekennzeichnet, dass** der elastische Ring (36) in Längsrichtung verschiebbar ausgebildet ist.

11. Adapter (1) nach einem der Ansprüche 2 bis 4, **dadurch gekennzeichnet, dass** der Einsteckabschnitt (5) zwei um 180° versetzte radial bewegbare Backen (12) aufweist.

12. Adapter (1) nach Anspruch 11, **dadurch gekennzeichnet, dass** die Backen (12) mit je zwei schräg angeordneten und zueinander gewandten Backenflanken (56) ausgebildet sind.

13. Adapter (1) nach einem der Ansprüche 2 bis 4, **dadurch gekennzeichnet, dass** der Einsteckabschnitt (5) wenigstens drei im gleichen Winkelabstand angeordnete radial bewegbare Backen (12) aufweist.

14. Adapter (1) nach Anspruch 13, **dadurch gekennzeichnet, dass** die Backen (12) auf das Kameraobjektiv zu federbelastet sind.

15. Adapter (1) nach Anspruch 14, **dadurch gekennzeichnet, dass** zur Federbelastung ein die Backen (12) umspannender Federring (44) vorgesehen ist.

16. Adapter (1) nach Anspruch 13, **dadurch gekennzeichnet, dass** die radiale Position der Backen (12) auf den Durchmesser des Kameraobjektivs (2) einstellbar ist.

17. Adapter (1) nach Anspruch 16, **dadurch gekennzeichnet, dass** die Backen (12) zur Einstellung auf den Kameraobjektivdurchmesser in radialer Richtung synchron bewegbar sind.

18. Adapter (1) nach Anspruch 17, **dadurch gekennzeichnet, dass** die Backen (12) jeweils bezüglich einer zu der Längsachse (17) des Adapters (1) parallel ausgerichteten Achse schwenkbar angeordnet sind.

19. Adapter (1) nach Anspruch 18, **dadurch gekennzeichnet, dass** die Backen (12) lamellenartig geformt sind und in der Art einer Irisblende angeordnet sind.

20. Adapter (1) nach Anspruch 17, **dadurch gekennzeichnet, dass** zur synchronen Bewegung der Backen (12) ein um die Längsachse (17) des Adapters (1) drehbarer Betätigungsring (18, 46, 51) vorgesehen ist.

21. Adapter (1) nach Anspruch 20, **dadurch gekennzeichnet, dass** der Betätigungsring (18, 46, 51) durch eine Rasteinrichtung fixierbar ist.

22. Adapter (1) nach einem der Ansprüche 20 oder 21, **dadurch gekennzeichnet, dass** der Betätigungsring (18, 46, 51) eine Markierung (26) zur Einstellung seiner Drehposition für einen bestimmten Kameraobjektivdurchmesser aufweist.

23. Adapter (1) nach einem der Ansprüche 20 bis 22, **dadurch gekennzeichnet, dass** der Betätigungsring (18) die Backen (12) umgreift.

24. Adapter (1) nach einem der Ansprüche 20 oder 23, **dadurch gekennzeichnet, dass** der Betätigungsring (46) an seiner Innenseite sich in Umfangsrichtung kei 1 förmig von innen nach außen erstreckende Steuerflächen (47) aufweist, die jeweils an einem der Backen (12) angreifen.

25. Adapter (1) nach einem der Ansprüche 11 bis 16, **dadurch gekennzeichnet, dass** zur radialen Verstellung der Backen (12) ein Motor (57) angeordnet ist.

26. Adapter (1) nach Anspruch 25, **dadurch gekennzeichnet, dass** zwischen dem Motor (57) und einem die Backen (12) betätigenden Getriebe eine Rutschkupplung zwischengeschaltet ist.

27. Adapter (1) nach Anspruch 13, **dadurch gekennzeichnet, dass** die Backen (12) als an dem Adapter (1) verschwenkbar angelenkte Wipphebel (42) ausgebildet sind.

28. Adapter (1) nach Anspruch 13, **dadurch gekennzeichnet, dass** die Backen (12) als Blattfedern (50) ausgebildet sind.

29. Adapter (1) nach einem der Ansprüche 20 und 28, **dadurch gekennzeichnet, dass** jede Blattfeder (50) in Umfangsrichtung mit einem Ende (52) an dem Betätigungsring (51) und mit seinem anderen Ende (53) drehfest mit dem Befestigungsabschnitt (4) des Adapters (1) verbunden ist.

30. Adapter (1) nach Anspruch 13, **dadurch gekennzeichnet, dass** die Backen (12) verschiebbar geführt sind.

31. Adapter (1) nach Anspruch 30, **dadurch gekennzeichnet, dass** die Backen (12) in Radialausnehmungen (15) verschiebbar geführt sind.

32. Adapter (1) nach den Ansprüchen 20 und 30, **dadurch gekennzeichnet, dass** der Betätigungsring (18) in Umfangsrichtung schräg von innen nach außen verlaufende Steuernuten (21) aufweist, die über einen Vorsprung (27) den jeweiligen Backen (12) betätigen.

33. Adapter (1) nach Anspruch 31, **dadurch gekennzeichnet, dass** die Radialausnehmungen (15), in denen die Backen (12) geführt sind, in einem mit dem Befestigungsabschnitt (4) des Adapters (1) drehfest verbundenen Zwischenring (14) vorgesehen sind.

34. Adapter (1) nach den Ansprüchen 23 und 33, **dadurch gekennzeichnet, dass** der Betätigungsring (18) an dem Zwischenring (14) drehbar gelagert ist.

35. Adapter (1) nach Anspruch 34, **dadurch gekennzeichnet, dass** der Betätigungsring (18) zur drehbaren Lagerung an dem Zwischenring (14) Zungen (19) aufweist, die jeweils zwischen zwei Backen (12) an der Innenseite des Zwischenrings (14) angeordnet sind und den Zwischenring (14) übergreifen.

36. Adapter (1) nach einem der vorhergehenden Ansprüche, **dadurch gekennzeichnet, dass** dieser einen ersten Adapterteil (71) mit der ersten Zentriervorrichtung (74) und einen zweiten Adapterteil (72) mit der zweiten Zentriervorrichtung (75) umfasst, wobei die erste und die zweite Zentriervorrichtung (74, 75) jeweils durch einen Befestigungsabschnitt (4) zur Befestigung an dem Okular (3) oder an dem Objektiv (2) gebildet sind, und dass der erste Adapterteil (71) und der zweite Adapterteil (72) jeweils mit einer weiteren Zentriervorrichtung (76, 77) ausgebildet sind, wobei die weitere Zentriervorrichtung (76) des ersten Adapterteils (71) zur bedarfsweise zentriert ausgerichteten Anlage an bzw. Aufnahme der weiteren Zentriervorrichtung (77) des zweiten Adapterteils (72) ausgebildet ist.

37. Adapter (1) nach Anspruch 36, **dadurch gekennzeichnet, dass** die weitere Zentriervorrichtung (76) des ersten Adapterteils (71) und die weitere Zentriervorrichtung (77) des zweiten Adapterteils (72) mit zueinander komplementären Anlageflächen (78, 79) ausgebildet sind.

38. Adapter (1) nach Anspruch 37, **dadurch gekennzeichnet, dass** die Anlageflächen (78, 79) durch zur Längsachse (17) des Adapters (1) symmetrische Kegelflächen gebildet sind.

39. Adapter (1) einem der Ansprüche 37 oder 38, **dadurch gekennzeichnet, dass** im Bereich der Anlageflächen (78, 79) Magnete zur Erzeugung anziehender Kräfte zwischen dem ersten und dem zweiten Adapterteil (72) angeordnet sind.

## Claims

1. Adapter (1) for connecting the optical path of an optical recording device, in particular a camera, to the optical path of an observation device, with an attachment portion (4) for providing an attachment to one of the two devices, and the adapter (1) has two centring mechanisms (74, 75) for centring the optical axis (6) of a lens (3) of the recording device on the optical axis (7) of an eyepiece (3) of the observation device, and a first centring mechanism (74) co-operates with the eyepiece (3) of the observation device and a second centring mechanism (75) co-operates with the lens (2) of the recording device, and the first centring mechanism (74) is designed to be attached to the eyepiece (3) or to a housing part of the observation device by means of the attachment portion (4) to provide a centred fit and hold of the adapter (1), and the second centring mechanism (75) is designed to provide a centred fit or hold on the lens (2) or on a housing part of the recording device when necessary, **characterised in that** the attachment portion (4) of the first centring mechanism (74) co-operating with the eyepiece (3) comprises an approximately semi-circular arch region (10) with two resilient lugs (11), and the resilient lugs (11) are designed to locate on one and the other side of the eyepiece.

2. Adapter (1) as claimed in claim 1, **characterised in that** the second centring mechanism (75) is formed by means of a socket portion (5), into which the camera (2) lens can be pushed.

3. Adapter (1) as claimed in claim 2, **characterised in that** the socket portion (5) has a means for fitting on the camera lens (2) which can be adjusted to the diameter of the camera lens (2).

4. Adapter (1) as claimed in one of the preceding claims, **characterised in that** the resilient lugs (11) locate round an eye cup (8) provided on the eyepiece (3) when the adapter (1) is fitted on the eyepiece (3).

5. Adapter (1) as claimed in claim 4, **characterised in that** the eye cup (8) can be attached to the eyepiece (3) of the observation device by means of an eye cup holder (21).

6. one of claims 2 to 5, **characterised in that** the socket portion (5) comprises a tubular elastic ring (30) and the internal diameter of the elastic ring (30) can be varied as a function of a pressure generated by a pump (59).

7. Adapter (1) as claimed in claim 6, **characterised in that** a control unit (58) is provided for activating the pump (59).

8. Adapter (1) as claimed in claim 7, **characterised in that** a pressure sensor (62) is provided as a means of monitoring the pressure in the elastic ring (30) and is connected to the control unit (58) so as to emit signals.

9. Adapter (1) as claimed in one of claims 2 to 4, **characterised in that** the socket portion (5) has a sleeve (35) provided with an elastic ring (36) inside.

10. Adapter as (1) claimed in claim 9, **characterised in that** the elastic ring (36) can be displaced in the longitudinal direction.

11. Adapter (1) as claimed in one of claims 2 to 4, **characterised in that** the socket portion (5) has two radially displaceable jaws (12) offset by 180°.

12. Adapter (1) as claimed in claim 11, **characterised in that** the jaws (12) each comprise two obliquely disposed and mutually facing jaw flanks (56).

13. Adapter (1) as claimed in one of claims 2 to 4, **characterised in that** the socket portion (5) has at least three radially displaceable (12) jaws disposed equidistantly.

14. Adapter (1) as claimed in claim 13, **characterised in that** the jaws (12) are spring-biased onto the camera lens.

15. Adapter (1) as claimed in claim 14, **characterised in that** a lock washer (44) extending round the jaws (12) generates the spring biasing action.

16. Adapter (1) as claimed in claim 13, **characterised in that** the radial position of the jaws (12) can be adjusted to the diameter of the camera lens (2).

17. Adapter (1) as claimed in claim 16, **characterised in that** the jaws (12) can be moved synchronously in the radial direction in order to adjust to the camera lens diameter.

18. Adapter (1) as claimed in claim 17, **characterised in that** the jaws (12) are respectively disposed so that they can pivot with respect to an axis oriented parallel with the longitudinal axis (17) of the adapter (1).

19. Adapter (1) as claimed in claim 18, **characterised in that** the jaws (12) are of a flap-type design and are disposed in an iris pattern.

20. Adapter (1) as claimed in claim 17, **characterised in that** an operating ring (18, 46, 51) rotatable about the longitudinal axis (17) of the adapter (1) is provided as a means of synchronously moving the jaws (12).

21. Adapter (1) as claimed in claim 20, **characterised in that** the operating ring (18, 46, 51) can be fixed by means of a catch system or similar.

22. Adapter (1) as claimed in one of claims 20 or 21, **characterised in that** the operating ring (18, 46, 51) has a marking (26) for setting its rotary position for a specific camera lens diameter.

23. Adapter (1) as claimed in one of claims 20 to 22, **characterised in that** the operating ring (18) extends round the jaws (12).

24. Adapter (1) as claimed in one of claims 20 or 23, **characterised in that** the operating ring (46) has control surfaces (47) extending in a wedge shape in the circumferential direction from the inside to the outside on its internal face, which respectively act on one of the jaws (12).

25. Adapter (1) as claimed in one of claims 11 to 16, **characterised in that** a motor (57) is provided as a means of radially moving the jaws (12).

26. Adapter (1) as claimed in claim 25, **characterised in that** a slip clutch is interconnected between the motor (57) and a gear operating the jaws (12).

27. Adapter (1) as claimed in claim 13, **characterised in that** the jaws (12) comprise rocker levers (42) pivotably linked to the adapter (1).

28. Adapter (1) as claimed in claim 13, **characterised in that** the jaws (12) comprise leaf springs (50).

29. Adapter (1) as claimed in one of claims 20 and 28, **characterised in that** each leaf spring (50) is connected in the circumferential direction to the operating ring (51) by one end (52) and by its other end (53) is connected to the attachment portion (4) of the adapter (1) so that it cannot rotate.

30. Adapter (1) as claimed in claim 13, **characterised in that** the jaws (12) are guided in displacement.

31. Adapter (1) as claimed in claim 30, **characterised in that** the jaws (12) are guided in radial recesses (15) as they are displaced.

32. Adapter (1) as claimed in one of claims 20 and 30, **characterised in that** the operating ring (18) has control grooves (21) extending obliquely from the inside towards the outside in the circumferential direction, which operate the respective jaws (12) by means of a projection (27).

33. Adapter (1) as claimed in claim 31, **characterised in that** the radial recesses (15) in which the jaws (12) are guided are disposed in an intermediate ring (14) connected to the attachment portion (4) of the adapter (1) so that it cannot rotate.

34. Adapter (1) as claimed in claims 23 and 33, **characterised in that** the operating ring (18) is mounted so that it can rotate on the intermediate ring (14).

35. Adapter (1) as claimed in claim 34, **characterised in that** the operating ring (18) has lugs (19) to provide a rotatable mount on the intermediate ring (14), which are respectively disposed between two jaws (12) on the internal face of the intermediate ring (14) and locate round the intermediate ring (14).

36. Adapter (1) as claimed in one of the preceding claims, **characterised in that** it comprises a first adapter part (71) incorporating the first centring mechanism (74) and a second adapter (72) part incorporating the second centring mechanism (75), and the first and second centring mechanism (74, 75) are respectively provided in the form of an attachment portion (4) for attaching to the eyepiece (3) or to the lens (2), and the first adapter part (71) and second adapter part (72) are respectively provided with another centring mechanism (76, 77), and the other centring mechanism (76) of the first adapter part (71) is designed to provide a centrally oriented fit or hold on the other centring mechanism (77) of the second adapter part (72) when necessary.

37. Adapter (1) as claimed in claim 36, **characterised in that** the other centring mechanism (76) of the first adapter part (71) and the other centring mechanism (77) of the second adapter part (72) are provided with mutually complementary contact surfaces (78, 79).

38. Adapter (1) as claimed in claim 37, **characterised in that** the contact surfaces (78, 79) are provided in the form of conical surfaces which are symmetrical by reference to the longitudinal axis (17) of the adapter (1).

39. Adapter (1) as claimed in one of claims 37 or 38, **characterised in that** magnets are disposed in the region of the contact surfaces (78, 79) for generating forces of attraction between the first and second adapter part (72).

## Revendications

1. Adaptateur (1) destiné à relier la trajectoire du faisceau d'un appareil d'enregistrement optique, en particulier une caméra, avec la trajectoire du faisceau d'un appareil d'observation, comportant une partie de fixation (4) pour la fixation à l'un des deux appareils, l'adaptateur (1) comportant deux dispositifs de centrage (74, 75) pour le centrage de l'axe optique (6) d'un objectif (2) de l'appareil d'enregistrement sur l'axe optique (7) d'un oculaire (3) de l'appareil d'observation, un premier dispositif de centrage (74) étant associé à l'oculaire (3) de l'appareil d'observation et un deuxième dispositif de centrage (75) étant associé à l'objectif (2) de l'appareil d'enregistrement, et le premier dispositif de centrage (74) étant réalisé par la partie de fixation (4) pour la mise en place et la fixation centrées de l'adaptateur (1) sur l'oculaire (3) ou sur une partie du boîtier de l'appareil d'observation, et le deuxième dispositif de centrage (75) étant réalisé pour la mise en appui ou la mise en place, si nécessaire orientées de manière centrée, sur l'objectif (2) ou sur une partie du boîtier de l'appareil d'enregistrement, **caractérisé en ce que** la partie de fixation (4) du premier dispositif de centrage (74), associé à l'oculaire (3), comprend une zone courbe (10) en forme de demi-cercle avec deux languettes (11) flexibles, lesdites languettes (11) flexibles étant configurées pour entrer en contact de manière flexible avec l'un ou l'autre côté de l'oculaire.

2. Adaptateur (1) selon la revendication 1, **caractérisé en ce que** le deuxième dispositif de centrage (75) est formé par une partie d'enfichage (5), dans laquelle peut être enfiché l'objectif (2) de la caméra.

3. Adaptateur (1) selon la revendication 2, **caractérisé en ce que** la partie d'enfichage (5) comprend un moyen qui est prévu pour être mis en appui contre l'objectif (2) de la caméra et qui peut être ajusté au diamètre de l'objectif (2) de la caméra.

4. Adaptateur (1) selon l'une quelconque des revendications précédentes, **caractérisé en ce que**, lorsque l'adaptateur (1) est emmanché sur l'oculaire (3), les languettes (11) flexibles s'engagent derrière une bonnette (8) que comporte l'oculaire (3).

5. Adaptateur (1) selon la revendication 4, **caractérisé en ce que** la bonnette (8) peut être fixée au moyen d'un support (31) sur l'oculaire (3) de l'appareil d'observation.

6. Adaptateur (1) selon l'une quelconque des revendications 2 à 5, **caractérisé en ce que** la partie d'enfichage (5) est formée par une bague (30) élastique de forme tubulaire, le diamètre intérieur de ladite bague (30) élastique pouvant varier en fonction de la pression exercée par une pompe (59).

7. Adaptateur (1) selon la revendication 6, **caractérisé en ce qu'**un dispositif de commande (58) est réalisé pour commander la pompe (59).

8. Adaptateur (1) selon la revendication 7, **caractérisé en ce qu'**un capteur de pression (62), qui communique par signaux avec le dispositif de commande (58), est prévu pour le contrôle de la pression dans la bague (30) élastique.

9. Adaptateur (1) selon l'une quelconque des revendications 2 à 4, **caractérisé en ce que** la partie d'enfichage (5) comporte une douille (35), dont l'intérieur est munie d'une bague (36) élastique.

10. Adaptateur (1) selon la revendication 9, **caractérisé en ce que** la bague (36) élastique est réalisée de manière mobile dans la direction longitudinale.

11. Adaptateur (1) selon l'une quelconque des revendications 2 à 4, **caractérisé en ce que** la partie d'enfichage (5) comporte deux mors (12) radialement mobiles, décalés de 180°.

12. Adaptateur (1) selon la revendication 11, **caractérisé en ce que** les mors (12) sont réalisés chacun avec deux flancs (56) inclinés et orientés l'un vers l'autre.

13. Adaptateur (1) selon l'une quelconque des revendications 2 à 4, **caractérisé en ce que** la partie d'enfichage (5) comporte au moins trois mors (12) radialement mobiles, agencés à la même distance angulaire.

14. Adaptateur (1) selon la revendication 13, **caractérisé en ce que** les mors (12) sont sollicités par ressort vers l'objectif de la caméra.

15. Adaptateur (1) selon la revendication 14, **caractérisé en ce que** pour la sollicitation par ressort, il est prévu une bague à ressort (44) enserrant les mors (12).

16. Adaptateur (1) selon la revendication 13, **caractérisé en ce que** la position radiale des mors (12) peut être ajustée au diamètre de l'objectif (2) de la caméra.

17. Adaptateur (1) selon la revendication 16, **caractérisé en ce que** les mors (12) sont mobiles de manière synchrone dans la direction radiale en vue de leur ajustement au diamètre de l'objectif de la caméra.

18. Adaptateur (1) selon la revendication 17, **caractérisé en ce que** les mors (12) sont disposés respectivement de manière pivotante par rapport à un axe parallèle à l'axe longitudinal (17) de l'adaptateur (1).

19. Adaptateur (1) selon la revendication 18, **caractérisé en ce que** les mors (12) sont réalisés en forme de lamelles et sont disposés à la manière d'un diaphragme iris.

20. Adaptateur (1) selon la revendication 17, **caractérisé en ce que** pour le mouvement synchrone des mors (12) est prévue une bague de commande (18, 46, 51) apte à tourner autour de l'axe longitudinal (17) de l'adaptateur (1).

21. Adaptateur (1) selon la revendication 20, **caractérisé en ce que** la bague de commande (18, 46, 51) peut être fixée au moyen d'un dispositif de blocage.

22. Adaptateur (1) selon la revendication 20 ou 21, **caractérisé en ce que** la bague de commande (18, 46, 51) comporte un marquage (26) pour ajuster sa position de rotation à un diamètre déterminé de l'objectif de la caméra.

23. Adaptateur (1) selon l'une quelconque des revendications 20 à 22, **caractérisé en ce que** la bague de commande (18) enserre les mors (12).

24. Adaptateur (1) selon la revendication 20 ou 23, **caractérisé en ce que** la bague de commande (46) comporte, sur sa face intérieure, des surfaces de commande (47), qui s'étendent dans la direction circonférentielle en forme de clavette de l'intérieur vers l'extérieur et qui entrent en contact avec l'un des mors (12).

25. Adaptateur (1) selon l'une quelconque des revendications 11 à 16, **caractérisé en ce qu'**un moteur (57) est prévu pour le déplacement radial des mors (12).

26. Adaptateur (1) selon la revendication 25, **caractérisé en ce qu'**un accouplement à friction est intercalé entre le moteur (57) et l'engrenage actionnant les mors (12).

27. Adaptateur (1) selon la revendication 13, **caractérisé en ce que** les mors (12) sont réalisés sous la forme de leviers à bascule (42) articulés de manière pivotante sur l'adaptateur (1).

28. Adaptateur (1) selon la revendication 13, **caractérisé en ce que** les mors (12) sont réalisés sous la forme de ressorts à lame (50).

29. Adaptateur (1) selon les revendications 20 et 28, **caractérisé en ce que** chaque ressort à lame (50) est relié dans la direction circonférentielle par une extrémité (52) à la bague de commande (51) et par son autre extrémité (53) de manière solidaire en rotation avec la partie de fixation (4) de l'adaptateur (1).

30. Adaptateur (1) selon la revendication 13, **caractérisé en ce que** les mors (12) sont logés de manière mobile en translation.

31. Adaptateur (1) selon la revendication 30, **caractérisé en ce que** les mors (12) sont logés de manière mobile en translation dans des évidements radiaux (15).

32. Adaptateur (1) selon les revendications 20 et 30, **caractérisé en ce que** la bague de commande (18) comporte dans la direction circonférentielle des rainures de commande (21), qui sont orientées en oblique de l'intérieur vers l'extérieur et qui actionnent le mors (12) respectif par l'intermédiaire d'une saillie (27).

33. Adaptateur (1) selon la revendication 31, **caractérisé en ce que** les évidements radiaux (15), dans lesquels sont logés les mors (12), sont prévus dans une bague intermédiaire (14) reliée de manière solidaire en rotation avec la partie de fixation (4) de l'adaptateur (1).

34. Adaptateur (1) selon les revendications 23 et 33, **caractérisé en ce que** la bague de commande (18) est montée rotative sur la bague intermédiaire (14).

35. Adaptateur (1) selon la revendication 34, **caractérisé en ce que** la bague de commande (18), en vue de son montage rotatif sur la bague intermédiaire (14), comporte des languettes (19) qui sont disposées respectivement entre deux mors (12) sur la face intérieure de la bague intermédiaire (14) et s'engagent au-dessus de la bague intermédiaire (14).

36. Adaptateur (1) selon l'une quelconque des revendications précédentes, **caractérisé en ce que** celui-ci comprend une première partie (71) avec le premier dispositif de centrage (74) et une deuxième partie (72) avec le deuxième dispositif de centrage (75), le premier et le deuxième dispositif de centrage (74, 75) étant formés respectivement par une partie de fixation (4) pour la fixation sur l'oculaire (3) ou sur l'objectif (2), et **en ce que** la première partie (71) et la deuxième partie (72) de l'adaptateur sont réalisées chacune avec un dispositif de centrage (76, 77) supplémentaire, le dispositif de centrage (76) supplémentaire de la première partie (71) de l'adaptateur étant réalisé pour la mise en place ou la réception, si nécessaire alignées de manière centrée, du dispositif de centrage (77) supplémentaire de la deuxième partie (72) de l'adaptateur.

37. Adaptateur (1) selon la revendication 36, **caractérisé en ce que** le dispositif de centrage (76) supplémentaire de la première partie (71) de l'adaptateur et le dispositif de centrage (77) supplémentaire de la deuxième partie (72) de l'adaptateur sont réalisés avec des surfaces d'appui (78, 79) complémentaires entre elles.

38. Adaptateur (1) selon la revendication 37, **caractérisé en ce que** les surfaces d'appui (78, 79) sont formées par des surfaces coniques, symétriques à l'axe longitudinal (17) de l'adaptateur (1).

39. Adaptateur (1) selon la revendication 37 ou 38, **caractérisé en ce que** dans la zone des surfaces d'appui (78, 79) sont disposés des aimants destinés à générer des forces d'attraction entre la première et la deuxième partie (72) de l'adaptateur.
